# EUROPEAN PATENT SPECIFICATION

(11) **EP 0 992 797 B1**
(45) Date of publication and mention of the grant of the patent: **28.04.2004**
(21) Application number: 99119470.5
(22) Date of filing: 30.09.1999
(51) Int. Cl.: G01P 3/44, G01P 3/487

(54) **Rolling bearing unit with rotational speed sensor**
Kugellager mit Drehzahlsensor
Roulement à billes combiné avec capteur tachymétrique

(30) Priority: 06.10.1998 IT TO980835
(43) Date of publication of application: 12.04.2000
(73) Proprietor: SKF INDUSTRIE S.p.A., 10123 Torino (IT)
(72) Inventor: Vignotto, Angelo, 10134 Torino (To) (IT); Marivo, Massimo, 10060 Airasca (To) (IT)
(74) Representative: Lotti, Giorgio

(56) References cited:
- US-A- 5 530 344
- US-A- 5 575 568

## Description

The present invention relates to a manufacturing method for an encoder wheel for a rolling contact bearing and relevant product.

For the manufacturing of an encoder wheel to measure the rotation speed of the two rings of the bearing, and, therefore, of an encoder wheel whose qualities have to be minimum axial dimensions and maximum demandable accuracy, (see US-A-5 575 568) there is a well known, generally, method comprising a step of co-moulding a decoder element made of plastoferrite with an annular metallic support insert, and a step of magnetising the decoder element and the annular metallic insert' at the same time to give magnetisation with alternating polarities to at least the decoder element realising the encoder wheel.

The method described above presents some drawbacks which diminish the reliability and the lifetime of the encoder wheel in a relatively drastic way. In fact, in view of the fact that the decoder element is co-moulded over the metallic insert heating the decoder element and the metallic insert at the same time, the different thermal expansion of the materials of the two annular elements give rise to thermal stress, and this thermal stress can influence the precision of the magnetic pole and the relevant signal of the encoder wheel, and can even cause the breakdown of the encoder wheel.

Furthermore, once the encoder wheel manufactured according to the method described above is coupled to a relevant watertight protection shield and is then assembled to the rolling contact bearing, the assembly stress created is not only are likely to increase the above mentioned thermal stress, but can also compromise the functioning of the encoder wheel itself.

In the end, the contemporaneous magnetisation of the decoder element and the metallic insert causes further homogeneity problems inside the encoder wheel, as the magnetisation acquired by the metallic insert not only behaves in a way substantially different from the magnetisation acquired by the decoder element, but even disturbs the performance.

It is an aim of the present invention to provide a manufacturing method for an encoder wheel for a rolling contact bearing which will overcome the drawbacks described above.

The above, and further aims which will be more apparent hereinafter, are achieved according to the manufacturing method of claim 1 and an encoder wheel of claim 3, the preamble of which is disclosed in US-A-5 530 344.

Advantageous embodiments are defined in the dependent claims.

According to the present invention an encoder wheel for a rolling contact bearing is realised, the encoder wheel comprises a magnetised multipolar ring and an annular metallic insert supporting said multipolar ring, the encoder wheel being characterised by the fact that the annular metallic insert comprises an annular receiving seat, and said multipolar ring being placed inside said receiving seat and being realised by magnetising a decoder element made of plastoferrite.

The invention will now be described with reference to the accompanying drawings, in which:
- FIG. 1: is an axial sectional view of a first preferred embodiment of an encoder wheel for a roller contact bearing in accordance with the present invention;
- FIG. 2: is a perspective view, with parts removed for the sake of clarity and on a reduced scale, of the encoder wheel shown in FIG. 1; and
- FIG. 3: is an axial sectional view of a second preferred embodiment of the encoder wheel for a roller contact bearing as shown in FIG. 1.

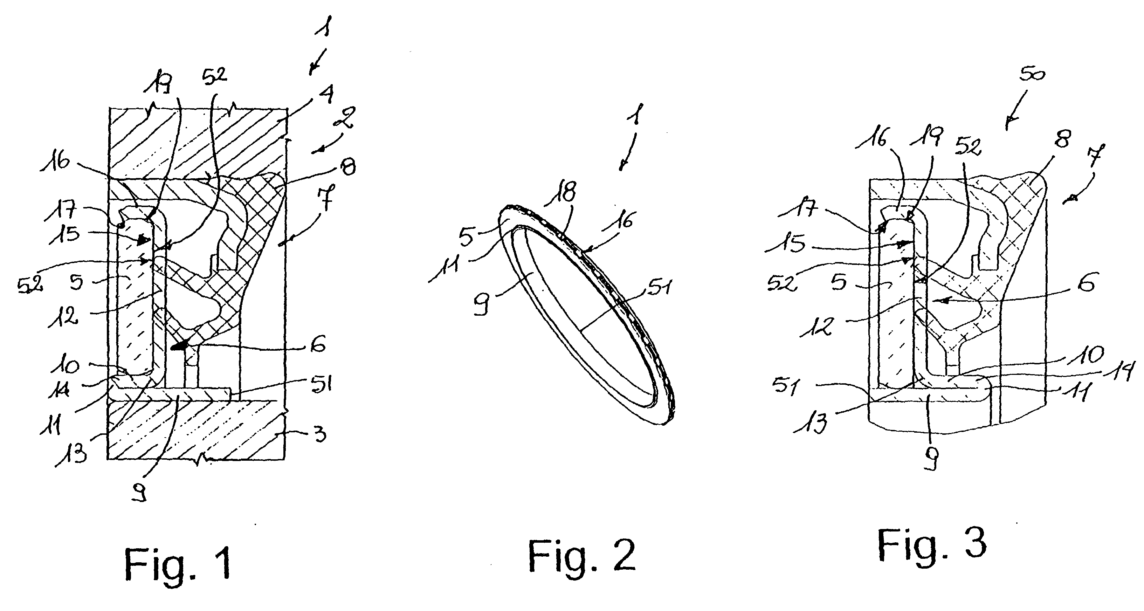

With reference initially to FIGS. 1 and 2, the number 1 indicates overall an encoder wheel for a roller contact bearing 2 which is partially illustrated and comprises an inner ring 3 and an outer ring 4 mounted coaxially to each other and to a rotation axis (not shown) of the bearing 2 itself.

The encoder wheel 1 comprises a magnetised multipolar ring 5, which is made of plastoferrite, and is obtained by the magnetisation of a decoder element, an annular metallic shield 6 which supports the ring 5 itself.

The shield 6 is also part of a sealing device 7 between the rings 3 and 4, which also comprises an annular lip seal 8, which is maintained in sliding contact on the axially internal side of the shield 6 itself, and is integrally mounted to the ring 4 of the bearing 2. The sealing device 7 is suitable for preventing the infiltration of external polluting agents into the interior parts of the bearing 2, and for keeping lubricating oil inside the bearing 2 itself.

The shield 6 has a substantially T-shaped axial section, and comprises a cylindrical element 9 which is shrunk on to the ring 3, a further cylindrical element 10 partially overlapping the element 9 itself, and a raked linking portion 11 between the elements 9 and 10 facing the outside of the bearing 2. The shield 6 also comprises a radial portion 12, which extends transversally from the element 9 in correspondence to a median portion of the element 9 itself, and is integral to an extremity 13 of the element 10 opposite an extremity 14 of the element 10 itself joined to the raked linking portion 11.

Finally, the shield 6 comprises a receiving seat 15 for the multipolar ring 5, and an input edge 16, which extends around the seat 15 itself, and is integral to the radial portion 12. The seat 15 has a substantially C-shaped axial section, and is delimited by the element 10, the radial portion 12 and the edge 16, which, respectively, define an internal cylindrical wall, a lateral radial wall and an external cylindrical wall of the seat 15 itself. The edge 16, apart from defining an annual input opening 17 for the ring 5 in the seat 15 facing the outside of the bearing 2, can also be a substantially elastic continuous border, or, as illustrated in Fig. 2, can comprise a number of fins 18, either elastic or otherwise refoldable to come into contact with the multipolar ring 5 in order to block the ring 5 itself inside the seat 15 rendering it fixed for rotation to the shield 6.

As previously described, the ring 5 is obtained by magnetising a decoder element in such a way as to present alternating polarities in a circumferential direction, and it forms part of a measuring device for measuring the relative rotation speeds between the rings 3 and 4 of the bearing 2. The ring 5 is arranged inside the seat 15 after being magnetised, and faces a sensor (noted but not illustrated), which is arranged outside the bearing 2, and is fixed for rotation to the stationary part of the bearing 2 itself, and is sensitive to any variations in the magnetic field due to the rotation of the ring 5 itself.

The ring 5 is provided with two blunt peripheral edges 19, and presents an external diameter which is substantially greater than an internal diameter of the edge 16, that is to say of the opening 17. In the case in which the edge 16 is a continuous elastic border, or the fins 18 are elastic fins, the ring 5 is snap mounted inside the seat 15 against an elastic force of the edge 16 or the fins 18. On the other hand, in the case in which the fins 18 are suitable for being refolded to come into contact with one of the two edges 19 of the ring 5, the latter is simply inserted inside the seat 15 in order to be successively blocked by the refolding of the fins 18 themselves.

As has already been mentioned, the manufacturing process of the encoder wheel begins with the magnetisation of the previously cited decoder element in such a way as to transform the decoder element itself into the magnetised multipolar ring 5. The process continues with the assembly of the ring 5 to the shield 6 which is carried out by snap mounting the ring 5 inside the seat 15 of the shield 6 itself against the elastic force of the edge 16. Once the ring 5 is arranged inside the seat 15, it is substantially radially compressed by the element 10 and the elastic force of the edge 16 on one of the edges 19 in such a way as maintain the ring 5 and the shield 6 fixed for rotation between themselves/in relation to each other.

In the case in which the edge 16 is provided with fins 18, once the ring 5 is inserted in the seat 15 without overcoming any elastic resistance from the edge 16 itself, the fins 18 are refolded to come into contact with one of the two edges 19 of the ring 5 itself rendering the ring 5 angularly integral with the shield 6.

At this point, the shield 6 is shrunk on to the internal ring 3 of the bearing 2 acting with a percussion element on the external part of the raked linking portion 11, and, in this way, is arranged with the radial portion 12 in sliding contact with the annular lip seal 8.

Figure 3 shows an encoder wheel 50 which is very similar to the encoder wheel 1, from which the encoder wheel 50 differs due to the fact that the raked linking portion 11 is arranged, in relation to the radial portion 12, on the opposite part of the seat 15, and does not define an internal wall of the seat 15 itself as for the encoder wheel 1. In this case, the above-mentioned internal wall of the seat 15 is directly defined by the element 9, and the multipolar ring 5 is, thus, radially blocked by the edge 16 and the element 9 itself.

The assembly of the ring 5 to the shield 6 in the encoder wheel 1 is carried out in the same way as previously described for the encoder wheel 1. On the other hand, the assembly of the encoder wheel 50 to the bearing 2 is carried out by acting with a percussion element on an external edge 51 of the element 9 opposite that which is integral to the raked linking portion 11.

Alternatively, or even in addition to the methods described above for making the ring 5 angularly integral with the shield 6, it is also possible to distribute adhesive material on a contact surface 52 of the shield 6 with the ring 5 itself. The surface 52 can be defined by a base surface of the seat 15, or by a lateral surface of the ring 5.

Finally, as another alternative, or even in addition to the methods described above for fixing the ring 5 angularly integral with the shield 6, it is possible to exploit the fact that the radial portion 12, being realised in a material which is sensitive to magnetisation, defines a preferential way for the closure of the magnetic field generated by the ring 5 in such a way as to define an attractional force between the ring 5 and the radial portion 12 which is suitable for coupling the ring 5 angularly integral with the shield 6.

Finally, the ring 5 and the shield 6 are further joined to each other due to the effect of the inevitable thermal expansion which the ring 5 undergoes during the functioning of the bearing 2.

## Claims

1. Manufacturing method for an encoder wheel (5) (50) for a rolling contact bearing (2), the encoder wheel (5) (50) comprising a magnetised multipolar ring (5) and an annular metallic shield (6) with a receiving seat (15) which is adapted to support said multipolar ring (5), said metallic shield (6) having at least one input edge (16) extending around the seat (15) and defining an external cylindrical wall of the seat (15) itself; the manufacturing method comprising a step of magnetisation of a decoder element made of plastoferrite to obtain the magnetised multipolar ring (5), and a step of mechanical coupling the multipolar ring (5) to the metallic shield (6); the method being **characterised by** the face that the step of mechanical coupling further comprises a step of snapping insertion of said multipolar ring (5) inside said seat (15) against a substantially elastic force of said input edge (16) so that the multipolar ring (5) is adapted to integrally rotate with the metallic shield (6), the input edge (16) being provided with an inner diameter substantially smaller than the outer diameter of the multipolar ring (5).

2. Method as claimed in Claim 1, **characterised by** the fact that the multipolar ring (5) is provided with two peripheral opposite blunt edges (19).

3. Encoder wheel (5) (50) for a rolling contact bearing (2), the encoder wheel (5)(50) comprises a magnetised multipolar ring (5) which is realised by magnetising a decoder element made of plastoferrite, and an annular metallic shield (6). with a receiving seat (15) adapted to support said multipolar ring (5), the metallic shield (6) having at least one input edge (16) extending around the seat (15) and defining an external cylindrical wall of the seat (15) itself; the encoder wheel (5) (50) being **characterised by** the fact that said input edge (16) is provided with an inner diameter substantially smaller than an outer diameter of the multipolar ring (5) to exert a substantially elastic force when the during manufacturing the multipolar ring (5) is inserted inside the seat (15) so that the multipolar ring (5) is adapted to integrally rotate with the metallic shield (6).

4. Encoder wheel as claimed in Claim 3, **characterised by** the fact that said input edge (16) comprises a number of refoldable fins (18) which are adapted to come into contact with said multipolar ring (5).

5. Encoder wheel as claimed in Claim 3 or 4, **characterised by** the fact that said multipolar ring (5) is provided with two peripheral opposite blunt edges (19).

6. Encoder wheel as claimed in any of the Claims from 3 to 5, **characterised by** the fact that said annular metallic shield (6) comprises a first cylindrical portion (9) and a radial portion (12) that extends transversely from the first portion (9) to define said receiving seat (15) together with said input edge (16).

7. Encoder wheel as claimed in Claim 6, **characterised by** the fact that said annular metallic shield (6) comprises a second cylindrical portion (10), which overlaps the first cylindrical portion (9), and is interposed between the first cylindrical portion (9) and said radial portion (12).

8. Encoder wheel as claimed in Claim 6, **characterised by** the fact that said annular metallic shield (6) comprises a raked linking portion (11) between said first and second cylindrical portions (9, 10).

9. Encoder wheel as claimed in Claim 8, **characterised by** the fact that said raked linking portion (11) is placed on the same side of said receiving seat (15) with respect to the said radial portion (12).

10. Encoder wheel as claimed in Claim 9, **characterised by** the fact that said raked linking portion (11) is arranged opposite of said receiving seat (15) with respect to the said radial portion (12); said first cylindrical portion (9) defining an inner annular wall of the receiving seat (15).

11. Encoder wheel as claimed in any of the claims from 3 to 10, **characterised by** the fact that said receiving seat (15) comprises a radial wall (12), which defines a preferential way for the closure of the magnetic field generated by the multipolar ring (5), and is able, in use, to give rise to an attractional force between the shield (6) and the multipolar ring (5) so that the multipolar ring (5) integrally rotates with the metallic shield (6).

## Patentansprüche

1. Herstellungsverfahren für ein Kodierrad (5) (50) für ein Kugelkontaktlager (2), wobei das Kodierrad (5) (50) einen magnetisierten mehrpoligen Ring (5) und eine ringförmige metallische Abschirmung (6) mit einem Aufnahmesitz (15) umfasst, der geeignet ist, den mehrpoligen Ring (5) zu tragen, wobei die metallische Abschirmung (6) mindestens eine Eingabekante (16) aufweist, die sich um den Sitz (15) erstreckt und eine äußere zylindrische Wand des Sitzes (15) selbst beschreibt; wobei das Herstellungsverfahren einen Schritt des Magnetisierens eines Dekodiergliedes umfasst, das aus Plastoferrit hergestellt ist, um den magnetisierten mehrpoligen Ring (5) zu erhalten, und einen Schritt der mechanischen Kopplung des mehrpoligen Ringes (5) mit der metallischen Abschirmung (6) umfasst; wobei das Verfahren **dadurch gekennzeichnet ist, dass** der Schritt der mechanischen Kopplung weiter einen Schritt des Hineindrückens des mehrpoligen Ringes (5) in den Sitz (15) gegen eine deutliche elastische Kraft der Eingabekante (16) umfasst, so dass der mehrpolige Ring (5) einstückig mit der metallischen Abschirmung (6) drehbar ist, wobei die Eingabekante (16) mit einem Innendurchmesser bereitgestellt ist, der deutlich kleiner ist als der Außendurchmesser des mehrpoligen Ringes.

2. Verfahren nach Anspruch 1, **dadurch gekennzeichnet, dass** der mehrpolige Ring (5) mit zwei umfänglichen gegenüberliegenden stumpfen Kanten (19) bereitgestellt ist.

3. Kodierrad (5) (50) für ein Kugelkontaktlager (2), das Kodierrad (5) (50) umfasst einen magnetisierten mehrpoligen Ring (5), was durch Magnetisieren eines Dekodiergliedes aus Plastoferrit ausgeführt wird, und eine ringförmige metallische Abschirmung (6) mit einem Aufnahmesitz (15), der geeignet ist, den mehrpoligen Ring (5) zu tragen, wobei die metallische Abschirmung (6) mindestens eine Eingabekante (16) hat, die sich um den Sitz (15) erstreckt und eine äußere zylindrische Wand des Sitzes (15) selbst beschreibt; wobei das Kodierrad (5) (50) **dadurch gekennzeichnet ist, dass** die Eingabekante (15) mit einem Innendurchmesser bereitgestellt ist, der deutlich kleiner ist als ein Außendurchmesser des mehrpoligen Ringes (5), um eine deutliche elastische Kraft auszuüben, wenn der mehrpolige Ring (5) während der Herstellung in den Sitz (15) eingesetzt wird, so dass der mehrpolige Ring (5) einstückig mit der metallischen Abschirmung (6) drehbar ist.

4. Kodierrad nach Anspruch 3, **dadurch gekennzeichnet, dass** die Eingabekante (16) mehrere zusammenfaltbare Stege (18) umfasst, die geeignet sind, mit dem mehrpoligen Ring (5) in Kontakt zu kommen.

5. Kodierrad nach Anspruch 3 oder 4, **dadurch gekennzeichnet, dass** der mehrpolige Ring (5) mit zwei umfänglichen gegenüberliegenden stumpfen Kanten (19) bereitgestellt ist.

6. Kodierrad nach einem der Ansprüche 3 bis 5, **dadurch gekennzeichnet, dass** die ringförmige metallische Abschirmung (6) einen ersten zylindrischen Abschnitt (9) und einen radialen Abschnitt (12) umfasst, der sich quer von dem ersten Abschnitt (9) erstreckt, um den Aufnahmesitz (15) zusammen mit der Eingabekante (16) zu beschreiben.

7. Kodierrad nach Anspruch 6, **dadurch gekennzeichnet, dass** die ringförmige metallische Abschirmung (6) einen zweiten zylindrischen Abschnitt (10) umfasst, der den ersten zylindrischen Abschnitt (9) überlappt und zwischen den ersten zylindrischen Abschnitt (9) und den radialen Abschnitt (12) gesetzt wird.

8. Kodierrad nach Anspruch 6, **dadurch gekennzeichnet, dass** die ringförmige metallische Abschirmung (6) einen abgeschrägten Verbindungsabschnitt (11) zwischen dem ersten und dem zweiten zylindrischen Abschnitt (9, 10) umfasst.

9. Kodierrad nach Anspruch 8, **dadurch gekennzeichnet, dass** der abgeschrägte Verbindungsabschnitt (11) an derselben Seite des Aufnahmesitzes (15) gegenüber dem radialen Abschnitt (12) angeordnet ist.

10. Kodierrad nach Anspruch 9, **dadurch gekennzeichnet, dass** der abgeschrägte Verbindungsabschnitt (11) gegenüber dem Aufnahmesitz (15) gegenüber dem radialen Abschnitt (12) angeordnet ist, wobei der zylindrische Abschnitt (9) eine innere ringförmige Wand des Aufnahmesitzes (15) beschreibt.

11. Kodierrad nach einem der Ansprüche 3 bis 10, **dadurch gekennzeichnet, dass** der Aufnahmesitz (15) eine radiale Wand (12) umfasst, die einen bevorzugten Weg zum Schließen des Magnetfeldes beschreibt, das von dem mehrpoligen Ring (5) erzeugt wird, und im Einsatz geeignet ist, eine Anziehungskraft zwischen der Abschirmung (6) und dem mehrpoligen Ring (5) erzeugen, so dass sich der mehrpolige Ring (5) einstückig mit der metallischen Abschirmung (6) dreht.

## Revendications

1. Procédé de fabrication d'un capteur tachymétrique (5) (50) pour palier (2) à roulement, le capteur tachymétrique (5) (50) comprenant une bague multipolaire aimantée (5) et un blindage métallique annulaire (6) comprenant un siège récepteur (15) qui peut supporter ladite bague multipolaire (5), ledit blindage métallique (6) comportant au moins un bord d'entrée (16) qui s'étend autour du siège (15) et définit une paroi cylindrique externe dudit siège (15); ledit procédé de fabrication comprenant une étape d'aimantation d'un élément décodeur en plastoferrite pour obtenir la bague multipolaire aimantée (5), et une étape de couplage mécanique de la bague multipolaire (5) au blindage métallique (6), et le procédé étant **caractérisé en ce que** l'étape de couplage mécanique comprend en outre une étape consistant à insérer par encliquetage ladite bague multipolaire (5) à l'intérieur dudit siège (15) en opposition à une force essentiellement élastique dudit bord d'entrée (16), de sorte que la bague multipolaire (5) peut tourner d'un seul tenant avec le blindage métallique (6), le diamètre interne du bord d'entrée (16) étant sensiblement inférieur au diamètre externe de la bague multipolaire (5).

2. Procédé selon la revendication 1, **caractérisé en ce que** la bague multipolaire (5) comporte deux bords périphériques émoussés opposés (19).

3. Capteur tachymétrique (5) (50) pour palier (2) à roulement, le capteur tachymétrique (5) (50) comprenant une bague multipolaire aimantée (5) qui est réalisée en aimantant un élément décodeur en plastoferrite, et un blindage métallique annulaire (6) comprenant un siège récepteur (15) apte à supporter ladite bague multipolaire (5), le blindage métallique (6) incluant au moins un bord d'entrée (16) qui s'étend autour du siège (15) et définit une paroi cylindrique externe dudit siège (15); ledit capteur tachymétrique (5) (50) étant **caractérisé en ce que** ledit bord d'entrée (16) est d'un diamètre interne sensiblement inférieur au diamètre externe de la bague multipolaire (5) afin d'exercer une force essentiellement élastique lorsque la bague multipolaire (5) est insérée, lors du montage, à l'intérieur du siège (15), de sorte que la bague multipolaire (5) peut tourner d'un seul tenant avec le blindage métallique (6).

4. Capteur tachymétrique selon la revendication 3, **caractérisé en ce que** ledit bord d'entrée (16) comprend un certain nombre d'ailettes repliables (18) agencées pour venir en contact avec ladite bague multipolaire (5).

5. Capteur tachymétrique selon la revendication 3 ou 4, **caractérisé en ce que** ladite bague multipolaire (5) comporte deux bords périphériques émoussés opposés (19).

6. Capteur tachymétrique selon l'une quelconque des revendications 3 à 5, **caractérisé en ce que** ledit blindage métallique annulaire (6) comprend une première partie cylindrique (9), et une partie radiale (12) qui s'étend transversalement à partir de la première partie (9) afin de définir ledit siège récepteur (15) ainsi que ledit bord d'entrée (16).

7. Capteur tachymétrique selon la revendication 6, **caractérisé en ce que** ledit blindage métallique annulaire (6) comprend une deuxième partie cylindrique (10) qui recouvre la première partie cylindrique (9), et est interposée entre la première partie cylindrique (9) et ladite partie radiale (12).

8. Capteur tachymétrique selon la revendication 6, **caractérisé en ce que** ledit blindage métallique annulaire (6) comprend une partie inclinée de liaison (11) agencée entre lesdites première et deuxième parties cylindriques (9, 10).

9. Capteur tachymétrique selon la revendication 8, **caractérisé en ce que** ladite partie inclinée de liaison (11) est située du même côté du siège récepteur (15) que ladite partie radiale (12).

10. Capteur tachymétrique selon la revendication 9, **caractérisé en ce que** ladite partie inclinée de liaison (11) est agencée à l'opposé dudit siège récepteur (15) par rapport à ladite partie radiale (12), ladite première partie cylindrique (9) définissant une paroi annulaire interne du siège récepteur (15).

11. Capteur tachymétrique selon l'une quelconque des revendications 3 à 10, **caractérisé en ce que** ledit siège récepteur (15) comprend une paroi radiale (12), qui définit un trajet préférentiel de fermeture du champ magnétique engendré par la bague multipolaire (5), et peut exercer, en cours d'utilisation, une force d'attraction entre le blindage (6) et la bague multipolaire (5) de telle sorte que la bague multipolaire (5) tourne d'un seul tenant avec le blindage métallique (6).
